# EUROPÄISCHE PATENTANMELDUNG

(11) **EP 4 574 451 A1**
(43) Veröffentlichungstag der Anmeldung: **25.06.2025**
(21) Anmeldenummer: 24212914.6
(22) Anmeldetag: 14.11.2024
(51) Int. Cl.: B60C 1/00, B60C 11/16, C08L 7/00

(54) **KAUTSCHUKMISCHUNG ZUR UMMANTELUNG VON SPIKES**

(30) Priorität: 14.12.2023 DE 102023212676
(71) Anmelder: Continental Reifen Deutschland GmbH, 30175 Hannover (DE)
(72) Erfinder: Kendziorra, Norbert, 30175 Hannover (DE); Voiges, Kristin, 30175 Hannover (DE); Weber, Christian, 30175 Hannover (DE); Komischke, Ralf, 30175 Hannover (DE)
(74) Vertreter: Continental Corporation

(57) **Zusammenfassung**

Die Erfindung betrifft eine vulkanisierbare Kautschukmischung, umfassend: i) Naturkautschuk in einem kombinierten Massenanteil von 25 phr oder mehr, ii) synthetisches Polyisopren in einem kombinierten Massenanteil im Bereich von 20 bis 45 phr, wobei das synthetische Polyisopren eine gewichtsmittlere Molmasse Mw, gemessen mittels GPC, im Bereich von 20000 bis 80000 g/mol aufweist, und iii) einen oder mehrere Füllstoffe in einem kombinierten Massenanteil von 35 phr oder mehr, wobei der kombinierte Massenanteil an Weichmacherölen in der vulkanisierbaren Kautschukmischung 20 phr oder weniger beträgt.

## Beschreibung

Die Erfindung betrifft eine vulkanisierbare Kautschukmischung, ein daraus herstellbares Vulkanisat und einen Spikeverbund umfassend ein solches Vulkanisat sowie einen Fahrzeugreifen, umfassend eine Vielzahl an entsprechenden Spikeverbunden. Offenbart werden zudem ein Verfahren zur Befestigung eines Reifenbauteils an einem Fahrzeugreifen mit einer solchen vulkanisierbaren Kautschukmischung und die Verwendung einer solchen vulkanisierbaren Kautschukmischung als Klebstoff.

In den letzten Jahrzehnten wurde vermehrt an neuen Lösungen für Fahrzeugreifen für den Einsatz unter winterlichen Fahrbedingungen gearbeitet. Insbesondere in Regionen, in welchen die Temperaturen in den Wintermonaten oder sogar ganzjährig unter den Gefrierpunkt sinken, werden an solche Fahrzeugreifen regelmäßig besonders hohe Anforderungen gestellt. In vielen Regionen, wie beispielsweise Skandinavien, Russland und Kanada müssen Winterreifen, welche besonders hohe Reibungswiderstände mit dem Untergrund aufweisen, in den Wintermonaten sogar gesetzlich verpflichtend verwendet werden.

Als auch für besonders anspruchsvolle Bedingungen besonders geeignet haben sich dabei sogenannte "Spike-Reifen" erwiesen, welche in ihrem Laufstreifenprofil in hierfür vorgesehenen Ausnehmungen eine Vielzahl von eingearbeiteten Stiften umfassen, die sogenannten Spikes. Spikes ragen zumeist etwa 1,5 bis 2 mm aus der Oberfläche des Fahrzeugreifenprofils hinaus und erhöhen die Reibung zwischen Fahrzeugreifen und Fahrbahnoberfläche erheblich. Dementsprechend sind sie insbesondere geeignet für solche Witterungsbedingungen, bei denen niedrige Reibwerte zwischen dem Fahrzeugreifen und der Oberfläche der Fahrbahn herrschen, wie es beispielsweise bei sehr glattem Eis und Temperaturen knapp unterhalb des Gefrierpunkts der Fall ist.

Die Spikes in Spike-Reifen sind beim Einsatz am Fahrzeug im Kontakt mit der Fahrbahnoberfläche besonders hohen Kräften ausgesetzt. Da die Spikes in den meisten Fällen nicht intrinsischer Bestandteil von herkömmlich hergestellten Fahrzeugreifenrohlingen sind, sondern in einem zusätzlichen Produktionsschritt in diese eingebracht werden müssen, muss die Verbindung zwischen Spike und Fahrzeugreifen entsprechend regelmäßig besonders hohe Anforderungen erfüllen.

Spikes werden üblicherweise zumindest anteilig durch Form- und/oder Kraftschluss, insbesondere durch eine Kombination aus Formschluss und Klemmung, in den für die Spikes vorgesehenen Ausnehmungen des Laufstreifens des vulkanisierten Fahrzeugreifens gehalten. Die Platzierung von Spikes in diesen Ausnehmungen im Laufstreifenprofil erfolgt beispielsweise mittels einer sogenannten Bespikungsanlage, wie sie beispielsweise aus der DE 10 2017 206 903 A1 und der EP 3 750 700 A1 bekannt sind.

Da herkömmliche Spike-Reifen zumeist hohe Spike-Verlustraten aufweisen, beispielsweise, weil die Spikes aufgrund der großen wirkenden Kräfte aus dem Laufstreifen gerissen werden, gibt es im Stand der Technik verschiedene Ansätze, die Spikes im Laufstreifen des Fahrzeugreifens besonders fest zu verankern. Dies wird insbesondere dadurch erreicht, dass Haftsysteme eingesetzt werden, welche eine stoffschlüssige Verbindung zwischen den Spikes und dem Gummimaterial des Laufstreifenprofils herstellen können.

Zur Verbesserung der Leistungsfähigkeit von Spikes sowie zur Effizienzsteigerung des Bespikungsprozesses wurde im Stand der Technik vorgeschlagen, als Spikes Verbundbauteile einzusetzen, welche neben den eigentlichen Spikes aus Metall oder Hartmetall auch eine abschnittsweise Ummantelung aus einer vulkanisierten Kautschukmischung umfassen. Entsprechende Spike-Verbunde sind beispielsweise in der WO 2020/119984 A1 offenbart.

Durch den Einsatz entsprechender Spike-Verbunde lassen sich im Vergleich mit herkömmlichen Spikes regelmäßig besonders vorteilhafte Spike-Reifen herstellen, die insbesondere eine verbesserte Leistung unter winterlichen Bedingungen und eine hohe Haltbarkeit aufweisen.

Die dabei im Spike-Mantel eingesetzte vulkanisierte Kautschukmischung, welche auch als "Sleeve Rubber" bezeichnet wird, und in Verbundspikes den größten Teil der zuvor genutzten Aluminium- oder Stahlkörper ersetzt, wird dabei im Stand der Technik bislang regelmäßig auf die Laufstreifenmischung des Spikereifens abgestimmt. Der Verbundspike wird nach der Vulkanisation in den vulkanisierten Fahrzeugreifen eingesetzt. Es wird im Stand der Technik angenommen, dass danach durch Migration des Weichmachers aus dem Laufstreifen in das Gummi des Spike-Körpers ein Ausgleich der Ölgehalte stattfindet, wodurch es zu einer weiteren Angleichung der Eigenschaften des Laufstreifenmaterials und des Sleeve Rubber kommt.

Trotz der generellen Vorteile, die mit dem Einsatz solcher Spikeverbunde erzielt werden können, werden diese hinsichtlich verschiedener Aspekte auch als verbesserungsbedürftig erachtet.

Beispielsweise ist die Adhäsion der Sleeve Rubber Mischung zum Spike-Pin teilweise auf einem relativ niedrigen Niveau, was teilweise auch nicht durch den Einsatz von ausgefeilten zweischichtigen, reaktiven Adhäsionssystem gelöst werden kann, mit denen die vulkanisierte Kautschukmischung und den Spike-Körper angebunden werden kann. Außerdem weist der Sleeve Rubber regelmäßig eine hohe Dämpfung auf, aus der hohe dynamische Kräfte während der Reifennutzung resultieren, die zu einem Materialversagen führen können.

Zudem wird auch die Herstellung entsprechender Spikeverbunde, bei der der zumeist metallische Spike-Körper mit der vulkanisierbaren Kautschukmischung in einem Einspritzverfahren umhüllt wird, bevor diese vulkanisiert wird. Bei den aus dem Stand der Technik bekannten vulkanisierbaren Kautschukmischungen für entsprechendes Sleeve-Rubber werden nämlich regelmäßig die vergleichsweise hohe Viskosität der Mischung und der erforderliche Zeitbedarf für die Vulkanisation als nachteilig empfunden.

Die primäre Aufgabe der vorliegenden Erfindung war es, die Nachteile des Standes der Technik auszuräumen oder zumindest zu verringern.

Insbesondere war es die Aufgabe der vorliegenden Erfindung, eine vulkanisierbare Kautschukmischung anzugeben, mit der sich Verbundspikes in besonders zeit- und kosteneffizienter Weise herstellen lassen, und die für den Herstellungsprozess günstige Verarbeitungseigenschaften aufweist, insbesondere eine vorteilhafte Viskosität und eine schnelle Vulkanisationskinetik.

Es war eine Aufgabe der vorliegenden Erfindung, dass die anzugebende vulkanisierbare Kautschukmischung mittels Vulkanisation in ein Vulkanisat überführbar sein sollte, welches verbesserte mechanische Eigenschaften aufweist, insbesondere ein verbessertes Rissbildungsverhalten, und besonders für den Einsatz als Spike-Mantel in einem Spike-Verbund geeignet ist, wobei sich insbesondere eine verbesserte Adhäsion zum metallischen Spike-Körper erreicht werden sollte.

Insoweit war es eine Aufgabe der vorliegenden Erfindung, dass die entsprechenden Spikeverbunde dank der im Spike-Mantel eingesetzten Vulkanisate der anzugebenden vulkanisierbaren Kautschukmischungen über ausgezeichnete Anwendungseigenschaften beim Einsatz als Spikes im Spikereifen aufweisen sollten, insbesondere mit Blick auf eine verbesserte Haltbarkeit gegen mechanische Belastungen und einer reduzierten Spikeverlustrate.

Zudem war es eine Aufgabe der vorliegenden Erfindung, neben der vulkanisierbaren Kautschukmischung, dem entsprechenden Vulkanisat und dem darauf aufbauenden Spikeverbund auch einen vorteilhaften bespikten Fahrzeugreifen bereitzustellen, der ausgezeichnete Fahreigenschaften unter schwierigen winterlichen Bedingungen und eine niedrige Spikeverlustrate aufweist.

Es war eine sekundäre Aufgabe der vorliegenden Erfindung eine alternative Verwendung der anzugebenden vulkanisierbaren Kautschukmischungen im Bereich der Reifenfertigung zu identifizieren.

Die Erfinder der vorliegenden Erfindung haben nunmehr gefunden, dass sich die vorstehenden Aufgaben überraschenderweise lösen lassen, wenn eine vulkanisierbare Kautschukmischung bereitgestellt wird, in der bei einem spezifischen Mindestgehalt an Füllstoff und niedrigen Anteilen an Weichmacheröl, Naturkautschuk mit einem bestimmten Gehalt an spezifischen Polyisopren kombiniert wird, wie es in den Ansprüchen definiert ist.

Die vorliegende Erfindung basiert dabei auf der Abkehr von dem bestehenden Vorurteil, dass das Sleeve Rubber möglichst ähnliche Eigenschaften aufweisen sollte, wie die Laufstreifenmischung. Darüber hinaus wurde auch die bestehende Annahme verworfen, dass die Sleeve Rubber Mischung möglichst steif sein sollte.

Durch die von der Laufstreifenmischung losgelöste Entwicklung konnten vorteilhafte Verarbeitungseigenschaften erreicht werden, insbesondere eine vorteilhafte Viskosität und eine günstige Vulkanisationskinetik. Das durch Vulkanisation erhaltene Vulkanisat ist weniger steif als die aus dem Stand der Technik bekannten Gummiwerkstoffe für Spike-Mantel und zeigt neben einer verbesserten Adhäsion zum Spike-Körper, ein verbessertes Bruchverhalten unter mechanischer Belastung, wie sie beispielsweise durch das Kippen des Spikes unter Schlupf verursacht wird.

Durch den Einsatz von daraus hergestellten Spikeverbunden lassen sich vorteilhafte bespikte Fahrzeugreifen erhalten, die auch unter schwierigen winterlichen Bedingungen ausgezeichnete Fahreigenschaften und eine niedrige Spikeverlustrate aufweisen.

Ohne an diese Theorie gebunden sein zu wollen gehen die Erfinder davon aus, dass insbesondere auch der mit Blick auf den Füllstoffgehalt relativ niedrige Gehalt an Weichmacheröl, welcher durch den Einsatz des spezifischen Polyisopren möglich wird, nach dem Einsatz der Verbundspikes in den Fahrzeugreifen in Folge des ausgeprägten Gradienten der Weichmacherölkonzentration zu einer besonders ausgeprägten Migration des Weichmacheröls aus dem umliegenden Gummiwerkstoff des Fahrzeugreifen kommt, die nach Einschätzung der Erfinder in vorteilhafter Weise zu dem positiven Eigenschaftsprofil beiträgt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Vulkanisate, Spikeverbunde, Verfahren, Verwendungen und Fahrzeugreifen ergeben sich aus den Merkmalen bevorzugter vulkanisierbarer Kautschukmischungen.

Insoweit nachfolgend für einen Mischungsbestandteil, beispielsweise für den Naturkautschuk oder das flüssige Polyisopren, sowohl spezifische Mengen bzw. Anteile dieses Mischungsbestandteils als auch bevorzugte Ausgestaltungen des Mischungsbestandteils offenbart werden, sind insbesondere auch die spezifischen Mengen bzw. Anteile der bevorzugt ausgestalteten Mischungsbestandteile offenbart. Zudem ist offenbart, dass bei den entsprechenden spezifischen Gesamtmengen bzw. Gesamtanteilen der Mischungsbestandteile zumindest ein Teil der Mischungsbestandteile bevorzugt ausgestaltet sein kann und insbesondere auch, dass bevorzugt ausgestaltete Mischungsbestandteile innerhalb der spezifischen Gesamtmengen oder Gesamtanteile wiederum in den spezifischen Mengen bzw. Anteilen vorliegen können.

Die Erfindung betrifft insbesondere eine vulkanisierbare Kautschukmischung, umfassend:
i) Naturkautschuk in einem kombinierten Massenanteil von 25 phr oder mehr,
ii) synthetisches Polyisopren in einem kombinierten Massenanteil im Bereich von 20 bis 45 phr, wobei das synthetische Polyisopren eine gewichtsmittlere Molmasse Mw, gemessen mittels GPC, im Bereich von 20000 bis 80000 g/mol aufweist, und
iii) einen oder mehrere Füllstoffe in einem kombinierten Massenanteil von 35 phr oder mehr,
wobei der kombinierte Massenanteil an Weichmacherölen in der vulkanisierbaren Kautschukmischung 20 phr oder weniger beträgt.

Vulkanisierbare Kautschukmischungen an sich und deren typische Komponenten sowie typische Herstellungsverfahren zum Erhalt entsprechender vulkanisierbarer Kautschukmischungen sind dem Fachmann im Bereich der Kautschukverarbeitung umfassend bekannt.

Im Rahmen der vorliegenden Erfindung erfolgt die Bestimmung der gewichtsmittleren Molmasse mittels Gelpermeationschromatographie gemäß DIN 55672-1: 2016-03 (GPC mit Tetrahydofuran als Elutionsmittel, Polystyrol-Standard; Größenausschlußchromatographie; engl. SEC = size exclusion chromatography).

Insoweit im Rahmen der Erfindung Massenanteile angegeben werden, werden diese in branchenüblicher Weise jeweils als kombinierte Massenanteile der einen oder der mehreren Komponenten, beispielsweise sämtlicher Füllstoffe oder sämtlicher synthetischer Polyisoprene, angegeben, wodurch ausgedrückt wird, dass der Massenanteil der entsprechend ausgebildeten Komponenten zusammengenommen die entsprechenden Kriterien erfüllt.

Die dabei verwendete Angabe phr (parts per hundred parts of rubber by weight) basiert im Rahmen der vorliegenden Erfindung dabei auf der in der Kautschukindustrie übliche Mengenangabe für Mischungsrezepturen, über die die Massenanteile der Komponenten in der Kautschukmischung bezogen auf die Masse der in der Kautschukmischung vorhandenen Kautschuke angegeben werden, wobei der kombinierte Masseanteil der hochmolekularen Kautschuke in der Kautschukmischung 100 phr entspricht und wobei im Rahmen der vorliegenden Erfindung Kautschuke mit einer gewichtsmittlere Molmasse Mw gemäß GPC von mehr als 20.000 g/mol als Kautschuke in die Berechnung der phr eingehen. Damit liegt die Untergrenze für die Zurechnung zu den Kautschuken im Rahmen der vorliegenden Erfindung etwas niedriger als in anderen Fällen, wo die Referenz teilweise nur durch höhermolekulare Kautschuke gebildet wird, die beispielsweise eine gewichtsmittlere Molmasse Mw gemäß GPC von mehr als 60.000 g/mol aufweisen. Diese Anpassung ist dem Umstand geschuldet, dass das erfindungsgemäß einzusetzende synthetische Polyisopren andernfalls im Graubereich der Zurechnung läge und die eindeutige Offenbarung und Definition der Erfindung erschweren könnte, da kleine Änderungen am synthetischen Polyisopren einen erheblichen Einfluss auf das Referenzsystem zur Berechnung der Massenanteile haben würden.

Um zu vermeiden, dass es angesichts der relativ niedrigen Untergrenze der gewichtsmittleren Molmasse zu Unklarheiten in der Abgrenzung zu Harzen kommt, welche theoretisch aus ähnlichen Monomereinheiten aufgebaut sein können, wie Kautschuke, wird im Rahmen der vorliegenden Erfindung definiert, dass nur Verbindungen mit einer gewichtsmittlere Molmasse Mw gemäß GPC von weniger als 20.000 g/mol den Harzen zugeordnet werden.

In den Experimenten der Erfinder hat sich gezeigt, dass zur Erreichung der vorstehend beschriebenen Vorteile insbesondere auf den Einsatz von Naturkautschuk gesetzt werden sollte. Bei Naturkautschuk (NR) handelt es sich um relativ hochmolekulares natürliches Polyisopren, welches dem Fachmann im Bereich der Kautschukverarbeitung umfassend bekannt und von verschiedenen Herstellern kommerziell erhältlich ist.

Die Erfinder erachten es als vorteilhaft, die vulkanisierbare Kautschukmischung relativ NR-reich auszuführen, wodurch sich vorteilhafte mechanische Eigenschaften und eine vorteilhafte Adhäsion zum Spike-Körper erreicht werden können. Bevorzugt ist eine erfindungsgemäße vulkanisierbare Kautschukmischung, wobei die vulkanisierbare Kautschukmischung Naturkautschuk in einem kombinierten Massenanteil von 30 phr oder mehr, bevorzugt 35 phr oder mehr, besonders bevorzugt 40 phr oder mehr, umfasst. Hierbei werden beim Einsatz von zwei oder mehr unterschiedlichen Naturkautschuken in Übereinstimmung mit dem fachmännischen Verständnis die kombinierten Massenanteile zugrunde gelegt.

Die Erfinder haben erkannt, dass sich besonders vorteilhafte Eigenschaften erreichen lassen, wenn das spezifische synthetische Polyisopren und der Naturkautschuk mit zumindest einem weiteren Kautschuk, insbesondere einem Dienkautschuk kombiniert wird. Bevorzugt ist folglich eine erfindungsgemäße vulkanisierbare Kautschukmischung, wobei die vulkanisierbare Kautschukmischung neben synthetischem Polyisopren und Naturkautschuk zumindest einen Dienkautschuk umfasst, bei dem es sich nicht um synthetisches Polyisopren oder Naturkautschuk handelt, bevorzugt in einem Massenanteil von 10 phr oder mehr, besonders bevorzugt von 15 phr oder mehr.

Als Dienkautschuke werden in Übereinstimmung mit dem fachmännischen Verständnis Kautschuke bezeichnet, die durch (Co-)Polymerisation von Dienen und/oder Cycloalkenen erhalten werden und somit entweder in der Hauptkette oder in den Seitengruppen C=C-Doppelbindungen aufweisen.

Unter den möglichen Dienkautschuken haben die Erfinder insbesondere den Einsatz von Butadienkautschuk (BR), d.h. Polybutadien, als besonders bevorzugt identifiziert. Das Polybutadien erlaubt in vorteilhafter Weise die Ausbildung einer höheren Vernetzung und führt dadurch zu besonders vorteilhaften mechanischen Eigenschaften. Bevorzugt ist demgemäß eine erfindungsgemäße vulkanisierbare Kautschukmischung, wobei die vulkanisierbare Kautschukmischung zusätzlich umfasst:
iv) Butadienkautschuk, bevorzugt in einem kombinierten Massenanteil von 15 phr oder mehr, besonders bevorzugt von 20 phr oder mehr, ganz besonders bevorzugt von 25 phr oder mehr.

Besonders bevorzugt sind der eine oder die mehreren Butadienkautschuke ausgewählt aus der Gruppe bestehend aus lösungspolymerisiertem Butadienkautschuk. Butadienkautschuke im Allgemeinen und die auch als low-cis-Butadienkautschuk (low-cis-BR) bezeichneten lösungspolymerisierten Butadienkautschuke sind dem Fachmann im Bereich der Kautschukverarbeitung bekannt und von zahlreichen Herstellern kommerziell erhältlich, beispielsweise von der Firma Zeon unter dem Handelsnamen NIPOL 1261.

Zusätzlich oder alternativ zum Einsatz von Butadienkautschuk können auch weitere Dienkautschuke eingesetzt werden. In diesem Fall handelt es sich um eine erfindungsgemäße vulkanisierbare Kautschukmischung, wobei die vulkanisierbare Kautschukmischung zusätzlich umfasst:
v) einen oder mehrere weitere Dienkautschuke, bei denen es sich nicht um den Naturkautschuk oder das synthetische Polyisopren, bevorzugt nicht um den Naturkautschuk, das synthetische Polyisopren oder das Polybutadien, handelt, bevorzugt in einem kombiniertem Massenanteil von 30 phr oder weniger, besonders bevorzugt von 20 phr oder weniger, besonders bevorzugt von 10 phr oder weniger. Bevorzugt ist insoweit eine erfindungsgemäße vulkanisierbare Kautschukmischung, wobei der eine oder die mehreren weiteren Dienkautschuke ausgewählt sind aus der Gruppe bestehend aus lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Styrol-Isopren-Butadien-Terpolymer, Butylkautschuk und Halobutylkauschuk, wobei der eine oder die mehreren Dienkautschuke bevorzugt ausgewählt ist aus der Gruppe bestehend aus lösungspolymerisiertem Styrol-Butadien-Kautschuk (SSBR) und emulsionspolymerisiertem Styrol-Butadien-Kautschuk (ESBR).

Beispielhaft ist eine erfindungsgemäße vulkanisierbare Kautschukmischung, wobei der Naturkautschuk und/oder der Butadienkautschuk und/oder die weiteren Dienkautschuke eine gewichtsmittlere Molmasse Mw, gemessen mittels GPC, im Bereich von 200000 bis 5000000 g/mol, bevorzugt im Bereich von 250000 bis 2500000, aufweisen.

Ein wesentlicher Aspekt der vorliegenden Erfindung ist, dass ein spezifisches synthetisches Polyisopren eingesetzt wird. Hierbei handelt es sich um ein synthetisches Polyisopren mit eher mittlerem Molekulargewicht. Synthetisches Polyisopren ist dem Fachmann im Bereich der Kautschukverarbeitung bekannt und von zahlreichen Herstellern kommerziell erhältlich. Der Zusatz "synthetisch" wird hierbei verwendet, um in Abgrenzung zu natürlichem Polyisopren die synthetische Herstellung des synthetischen Polyisoprens zu unterstreichen.

Entsprechendes synthetisches Polyisopren ist insbesondere in den mittleren und unteren Bereichen des angegebenen Molekulargewichts, welche nach Einschätzung der Erfinder für viele Anwendungen bevorzugt sind, häufig bei Raumtemperatur flüssig. Bevorzugt ist für die weit überwiegende Zahl der Fälle entsprechend auch eine erfindungsgemäße vulkanisierbare Kautschukmischung, wobei das synthetische Polyisopren, flüssiges synthetisches Polyisopren ist. Bevorzugt ist zusätzlich oder alternativ eine erfindungsgemäße vulkanisierbare Kautschukmischung, wobei das synthetische Polyisopren bei 38 °C eine Schmelzviskosität gemessen gemäß ISO 11443:2021-02 von 800 Pa*s oder weniger, bevorzugt 600 Pa*s oder weniger, besonders bevorzugt im Bereich von 50 bis 600 Pa*s, aufweist.

Zumindest theoretisch ist es möglich, dass neben dem spezifischen synthetischen Polyisopren auch zusätzlich weiteres synthetisches Polyisopren eingesetzt wird, dessen gewichtsmittlere Molmasse Mw außerhalb des vorstehend definierten Bereichs liegt, insbesondere bei mehr als 150.000 g/mol. Die Erfinder erachten es jedoch als besonders bevorzugt, wenn das in der vulkanisierten Kautschukmischung eingesetzte synthetische Polyisopren möglichst weitgehend das spezifische synthetische Polyisopren ist. Bevorzugt ist insoweit eine erfindungsgemäße vulkanisierbare Kautschukmischung, wobei das in der vulkanisierbaren Kautschukmischung enthaltene synthetische Polyisopren zu einem Massenanteil von 90 % oder mehr, bevorzugt 95 % oder mehr, besonders bevorzugt 98 % oder mehr, ganz besonders bevorzugt von im Wesentlichen 100 %, durch das spezifische synthetische Polyisopren gebildet wird.

Den Erfindern ist es gelungen, für den Gehalt des IR besonders vorteilhafte Bereiche zu identifizieren, mit denen sich ein besonders günstiges Eigenschaftsprofil erhalten lässt. Bevorzugt ist nämlich eine erfindungsgemäße vulkanisierbare Kautschukmischung, wobei die vulkanisierbare Kautschukmischung synthetisches Polyisopren in einem kombinierten Massenanteil von 22 phr oder mehr, bevorzugt 24 phr oder mehr, umfasst, und/oder wobei die vulkanisierbare Kautschukmischung synthetisches Polyisopren in einem kombinierten Massenanteil von 40 phr oder weniger, bevorzugt 35 phr oder weniger, umfasst.

Ausgehend von den durchgeführten Versuchen konnten die Erfinder besonders vorteilhafte synthetische Polyisoprene identifizieren, wobei neben dem Molekulargewicht auch die Glasübergangstemperatur zur Charakterisierung herangezogen werden kann. Bevorzugt ist zunächst eine erfindungsgemäße vulkanisierbare Kautschukmischung, wobei das synthetische Polyisopren eine gewichtsmittlere Molmasse Mw, gemessen mittels GPC, im Bereich von 25000 bis 70000 g/mol, bevorzugt im Bereich von 30000 bis 65000 g/mol, besonders bevorzugt im Bereich von 50000 bis 60000 g/mol, aufweist. Bevorzugt ist zusätzlich oder alternativ auch eine erfindungsgemäße vulkanisierbare Kautschukmischung, wobei das synthetische Polyisopren eine Glasübergangstemperatur, gemessen mittels DSC, T_{g} im Bereich von -40 bis -70 °C, bevorzugt im Bereich von - 45 bis -65 °C, besonders bevorzugt im Bereich von -55 bis -65 °C, aufweist.

Die erfindungsgemäße vulkanisierbare Kautschukmischung umfasst Füllstoffe. Bevorzugt ist eine erfindungsgemäße vulkanisierbare Kautschukmischung, wobei der eine oder die mehreren Füllstoffe ausgewählt sind aus der Gruppe bestehend aus Ruß und gefälltem Siliciumdioxid, bevorzugt Ruß. Während sich mit gefälltem Siliciumdioxid, welches zuweilen auch als gefällte Kieselsäure oder Silika bezeichnet wird, vor allem hinsichtlich des Rollwiderstandes des Vulkanisates Vorteile erzielen lassen, hat sich Ruß in den Experimenten der Erfinder als besonders vorteilhafter Füllstoff zur Verbesserung der Haltbarkeitseigenschaften erwiesen.

Bevorzugt ist eine erfindungsgemäße vulkanisierbare Kautschukmischung, wobei der eine oder die mehreren Füllstoffe eine Stickstoff-Oberfläche (BET-Oberfläche) gemäß DIN ISO 9277:2014-01 im Bereich von 35 bis 400 m²/g, bevorzugt im Bereich von 35 bis 350 m²/g, besonders bevorzugt im Bereich von 85 bis 320 m²/g, ganz besonders bevorzugt im Bereich von 120 bis 235 m²/g, aufweisen, und/oder wobei der eine oder die mehreren Füllstoffe eine CTAB-Oberfläche gemäß ASTM D 3765-03 im Bereich von 30 bis 400 m²/g, bevorzugt im Bereich von 30 bis 330 m²/g, besonders bevorzugt im Bereich von 80 bis 300 m²/g, ganz besonders bevorzugt im Bereich von 115 bis 200 m²/g, aufweisen

Die erfindungsgemäße vulkanisierbare Kautschukmischung ist prinzipiell relativ Füllstoff-reich. Gleichzeitig hat sich gezeigt, dass es für eine vorteilhafte mechanische Beständigkeit und eine günstige Steifigkeit bevorzugt ist, die Füllstoffgehalte insgesamt niedriger zu wählen als es beispielsweise aus der WO 2020/119984 A1 bekannt ist, was insbesondere auch den niedrigeren Anteilen an Weichmacheröl Rechnung trägt. Bevorzugt ist eine erfindungsgemäße vulkanisierbare Kautschukmischung, wobei die vulkanisierbare Kautschukmischung den einen oder die mehreren Füllstoffe in einem kombinierten Massenanteil von 40 phr oder mehr, bevorzugt 45 phr oder mehr, ganz besonders bevorzugt von 50 phr oder mehr, umfasst. Bevorzugt ist zusätzlich oder alternativ eine erfindungsgemäße vulkanisierbare Kautschukmischung, wobei die vulkanisierbare Kautschukmischung den einen oder die mehreren Füllstoffe in einem kombinierten Massenanteil von 95 phr oder weniger, bevorzugt 85 phr oder weniger, ganz besonders bevorzugt von 75 phr oder weniger, umfasst.

Die Erfinder haben für den Einsatz von Ruß identifiziert, dass prinzipiell niedrigere Obergrenzen bevorzugt sind. Bevorzugt ist nämlich eine vulkanisierbare Kautschukmischung, wobei die vulkanisierbare Kautschukmischung Ruß in einem kombinierten Massenanteil von 70 phr oder weniger, bevorzugt 60 phr oder weniger, ganz besonders bevorzugt von 45 phr oder weniger, umfasst.

Ein weiterer wesentlicher Aspekt der erfindungsgemäßen vulkanisierbaren Kautschukmischungen ist, dass diese eine vergleichsweise geringe Menge an Weichmacheröl umfassen. Weichmacheröle sind im Bereich der kautschukverarbeitenden Industrie wohlbekannt und von verschiedenen Anbietern kommerziell erhältlich. Weichmacheröle sind Öle, deren gewichtsmittleres Molekulargewicht gemessen mittels GPC kleiner als 2000 g/mol ist und deren Siedepunkt oberhalb von 100 °C liegt. Der vorstehend definierte Maximalgehalt an Weichmacherölen bezieht sich dabei auf die Summe aller dem Fachmann bekannten Weichmacheröle, wie beispielsweise aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL), oder pflanzliche Weichmacheröle wie beispielsweise Rapsöl oder Sonnenblumenöl.

Hierbei hat es sich nach Einschätzung der Erfinder als besonders vorteilhaft erwiesen, den Gradienten im Weichmacherölgehalt zwischen dem Gummiwerkstoff des Spikemantels und des Fahrzeugreifens möglichst groß zu halten, indem die vulkanisierbare Kautschukmischung besonders Weichmacheröl-arm ausgeführt wird, was sich insbesondere bei Ruß-basierten Systemen als vorteilhaft erwiesen hat. Bevorzugt ist insoweit eine erfindungsgemäße vulkanisierbare Kautschukmischung, wobei der kombinierte Massenanteil an Weichmacherölen in der vulkanisierbaren Kautschukmischung 18 phr oder weniger, bevorzugt 15 phr oder weniger, besonders bevorzugt 12 phr oder weniger, ganz besonders bevorzugt 9 phr oder weniger, beträgt.

Auch wenn es zumindest theoretisch denkbar wäre, die vulkanisierbare Kautschukmischung auch völlig frei von Weichmacherölen zu halten, erachten es die Erfinder insbesondere mit Blick auf die Verarbeitungseigenschaften als vorteilhaft, zumindest geringe Mengen an Weichmacheröl vorzusehen. Bevorzugt ist somit in vielen Fällen eine erfindungsgemäße vulkanisierbare Kautschukmischung, wobei die vulkanisierbare Kautschukmischung ein oder mehrere Weichmacheröle umfasst, bevorzugt in einem kombinierte Massenanteil im Bereich von 1 bis 20 phr, besonders bevorzugt im Bereich von 2 bis 15 phr, ganz besonders bevorzugt im Bereich von 3 bis 9 phr.

Bevorzugt ist hinsichtlich der Auswahl der Weichmacheröle eine erfindungsgemäße vulkanisierbare Kautschukmischung, wobei die vulkanisierbare Kautschukmischung ein oder mehrere Weichmacheröle umfasst, die ausgewählt sind aus der Gruppe bestehend aus Mineralölen, synthetischen Weichmacherölen, Pflanzenölen, insbesondere Rapsöl, Biomass-To-Liquid-Ölen (BTL-Öle) und Rubber-To-Liquid-Ölen (RTL-Öle).

Es kann als Vorteil der erfindungsgemäßen vulkanisierbaren Kautschukmischungen gesehen werden, dass diese hinsichtlich der Anwesenheit weiterer Komponenten, insbesondere von Harzen oder sonstigen Additiven sehr flexibel sind, so dass die physikalisch-chemischen Eigenschaften jeweils gezielt an den jeweiligen Anwendungszeck eingestellt werden können.

Bevorzugt ist insoweit zunächst eine erfindungsgemäße vulkanisierbare Kautschukmischung, wobei die vulkanisierbare Kautschukmischung zusätzlich umfasst:
vii) ein oder mehrere Harze, bevorzugt in einem kombinierten Massenanteil im Bereich von 0,2 bis 30 phr, besonders bevorzugt im Bereich von 0,5 bis 20 phr, ganz besonders bevorzugt im Bereich von 1 bis 10 phr.

Besonders bevorzugt ist dabei eine erfindungsgemäße vulkanisierbare Kautschukmischung, wobei das eine oder die mehreren Harze eine gewichtsmittlere Molmasse Mw, gemessen mittels GPC, im Bereich von 200 bis 19000 g/mol, bevorzugt im Bereich von 400 bis 15000 g/mol, besonders bevorzugt im Bereich von 600 bis 10000 g/mol, ganz besonders bevorzugt im Bereich von 800 bis 7500 g/mol, aufweisen.

Bevorzugt ist zusätzlich oder alternativ auch eine erfindungsgemäße vulkanisierbare Kautschukmischung, wobei die vulkanisierbare Kautschukmischung zusätzlich umfasst:
vii) ein oder mehrere Additive.

Beispielhaft ist insoweit eine erfindungsgemäße vulkanisierbare Kautschukmischung, wobei die Additive ausgewählt sind aus der Gruppe bestehend aus Methylen-Donoren, Alterungsschutzmittel, beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), Aktivatoren, beispielsweise Zinkoxid und Fettsäuren, Wachsen, Mastikationshilfsmitteln, beispielsweise 2,2'-Dibenzamidodiphenyldisulfid (DBD), Verarbeitungshilfsmitteln und Silan-Kupplungsagenzien, wobei die vulkanisierbare Kautschukmischung die Additive bevorzugt in einem kombinierten Massenanteil im Bereich von 0,1 bis 20 phr, bevorzugt im Bereich von 0,5 bis 15 phr, besonders bevorzugt im Bereich von 1 bis 10 phr, umfasst.

Bevorzugt ist mit Blick auf das zur Vulkanisation zugesetzte Vulkanisationssystem eine erfindungsgemäße vulkanisierbare Kautschukmischung, wobei die vulkanisierbare Kautschukmischung zusätzlich umfasst:
viii) Schwefel, bevorzugt in einem Massenanteil im Bereich von 0,5 bis 8,0 phr, bevorzugt im Bereich von 0,8 bis 6,0 phr, besonders bevorzugt im Bereich von 1 bis 5,0 phr.

Besonders bevorzugt ist insoweit eine erfindungsgemäße vulkanisierbare Kautschukmischung, wobei die vulkanisierbare Kautschukmischung weitere Vulkanisationsbestandteile umfasst, wobei die weiteren Vulkanisationsbestandteile ausgewählt sind aus der Gruppe bestehend aus Vernetzern, Vulkanisationsverzögerern und Vulkanisationsbeschleunigern, beispielsweise Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger oder Guanidin-Beschleuniger.

Die Erfinder haben gefunden, dass sich mit höheren Schwefelgehalten in erfindungsgemäßen vulkanisierbare Kautschukmischung, welche das spezifische IR umfassen, in vorteilhafter Weise gute Adhäsionseigenschaften zum Spike erzielen lassen. Bevorzugt ist für Anwendungsfälle, in denen eine vorteilhafte Adhäsion im Vordergrund steht, eine erfindungsgemäße vulkanisierbare Kautschukmischung, umfassend Schwefel in einem Massenanteil von mehr als 3 phr, bevorzugt mehr als 3,5 phr.

Allerdings haben die Erfinder gefunden, dass hohe Schwefelgehalte zu einer Verschlechterung einiger mechanischer Eigenschaften führen können. Bevorzugt sind für Anwendungsfälle, in denen die mechanischen Eigenschaften der Vulkanisate besonders relevant sind, entsprechend erfindungsgemäße vulkanisierbare Kautschukmischungen, umfassend Schwefel in einem Massenanteil von weniger als 3,5 phr, bevorzugt weniger als 3,0 phr.

Neben Weichmacherölen werden im Bereich der kautschukverarbeitenden Industrie zuweilen auch andere Weichmacher eingesetzt, insbesondere sogenannte Weichmacherharze, welche in Folge ihrer Wirkung auf die Kautschukmischung beispielsweise von Verstärkerharzen unterschieden werden, sowie vergleichsweise niedermolekulare, flüssige Polydiene, insbesondere Polybutadien.

Ausgehend von den Experimenten der Erfinder ist es im Gegensatz zu den zumeist deutlich niedermolekulareren Weichmacherölen nicht zwingend, den Gehalt an den alternativen Weichmachern zu begrenzen. Ohne an diese Theorie gebunden sein zu wollen wird dies auf die niedrigere Neigung zur Migration zurückgeführt.

Gleichzeitig ist es in Folge der Anwesenheit des spezifischen synthetischen Polyisoprens nicht unbedingt notwendig, größere Mengen an solchen alternativen Weichmachern einzusetzen.

Bevorzugt ist demgemäß zunächst eine erfindungsgemäße vulkanisierbare Kautschukmischung, wobei der kombinierte Massenanteil an Weichmacherharzen in der vulkanisierbaren Kautschukmischung 20 phr oder weniger, bevorzugt 15 phr oder weniger, besonders bevorzugt 12 phr oder weniger, ganz besonders bevorzugt 9 phr oder weniger, beträgt.

Bevorzugt ist zusätzlich oder alternativ auch eine erfindungsgemäße vulkanisierbare Kautschukmischung, wobei der kombinierte Massenanteil an flüssigem Polydien, insbesondere flüssigem Polybutadien, mit einem gewichtsmittlere Molmasse Mw, gemessen mittels GPC, im Bereich von 2000 bis 19000 g/mol, in der vulkanisierbaren Kautschukmischung 15 phr oder weniger, bevorzugt 12 phr oder weniger, besonders bevorzugt 9 phr oder weniger, beträgt.

Wenn zumindest kleine Mengen an flüssigem Polydien eingesetzt werden sollen, sind Gehalte von 0,5 phr oder mehr, bevorzugt 1 phr oder mehr, zweckmäßig. Bevorzugt ist in diesem Fall eine erfindungsgemäße vulkanisierbare Kautschukmischung, wobei das flüssige Polydien bei 23 °C eine dynamische Viskosität gemessen gemäß DIN 53211:1987-06 von 20 Pa s oder weniger, bevorzugt 10 Pa s oder weniger, aufweist. Bevorzugt ist zusätzlich oder alternativ auch eine erfindungsgemäße vulkanisierbare Kautschukmischung, wobei das flüssige Polydien gewichtsmittlere Molmasse Mw, gemessen mittels GPC, im Bereich von 2500 bis 15000 g/mol, bevorzugt im Bereich von 3000 bis 12000 g/mol, besonders bevorzugt im Bereich von 3500 bis 9000 g/mol, aufweist.

Insgesamt erachten es die Erfinder als besonders vorteilhaft, im Lichte der Anwesenheit des spezifischen synthetischen Polyisoprens neben dem Weichmacheröl auch möglichst weitgehend auf den Einsatz sämtlicher sonstiger Weichmacher zu verzichten. Bevorzugt ist entsprechend eine erfindungsgemäße vulkanisierbare Kautschukmischung, wobei der kombinierte Massenanteil an Weichmacherölen, Weichmacherharzen und flüssigem Polydien mit einem gewichtsmittlere Molmasse Mw, gemessen mittels GPC, im Bereich von 2000 bis 19000 g/mol, 15 phr oder weniger, bevorzugt 12 phr oder weniger, besonders bevorzugt 9 phr oder weniger, beträgt.

Aus den erfindungsgemäßen vulkanisierbaren Kautschukmischungen können durch Vulkanisation in gewohnter Weise Vulkanisate, d.h. Gummiwerkstoffe hergestellt werden. Die Erfindung betrifft entsprechend ebenfalls ein Vulkanisat, hergestellt oder herstellbar durch Vulkanisation einer erfindungsgemäßen vulkanisierbaren Kautschukmischung.

Bevorzugt ist dabei ein erfindungsgemäßes Vulkanisat, wobei das Vulkanisat herstellbar ist durch Vulkanisation bei einer Temperatur im Bereich von 120 bis 200 °C, bevorzugt im Bereich von 130 bis 180 °C.

Unter Einsatz der erfindungsgemäßen vulkanisierbaren Kautschukmischung können in effizienter Weise durch Umspritzen von Spike-Körpern und anschließende Vulkanisation Spikeverbunde hergestellt werden, wobei insoweit erneut auf die WO 2020/119984 A1 verwiesen wird.

Die Erfindung betrifft vor diesem Hintergrund auch einen Spikeverbund für den Einsatz als Spike beim Bespiken von Fahrzeugreifen, umfassend:
I) einen Spike-Körper, und
II) einen Spike-Mantel, umfassend ein erfindungsgemäßes Vulkanisat,
wobei der Spike-Mantel zumindest abschnittsweise um den Spike-Grundkörper herum angeordnet ist.

Der Spike-Körper umfasst insbesondere den Spike-Pin, welcher später den Grip auf der Fahrbahn steigern soll. Beispielhaft ist ein erfindungsgemäßer Spikeverbund, wobei der Spike-Körper eine Länge im Bereich von 5 bis 20 mm, bevorzugt im Bereich von 10 bis 20, besonders bevorzugt im Bereich von 10 bis 12 aufweist.

Bevorzugt ist ein erfindungsgemäßer Spikeverbund, wobei der Spike-Körper zumindest teilweise, bevorzugt zu einem Massenanteil von 50 % oder mehr, besonders bevorzugt zu 70 % oder mehr, ganz besonders bevorzugt zu 90 % oder mehr, insbesondere bevorzugt im Wesentlichen zu 100 %, aus einem Spike-Material besteht. Besonders bevorzugt ist hinsichtlich der Materialauswahl ein erfindungsgemäßer Spikeverbund, wobei das Spike-Material ausgewählt ist aus der Gruppe bestehend aus Metallen, insbesondere Aluminium und Stahl, und Verbundwerkstoffen, insbesondere Hartmetallen, bevorzugt ausgewählt ist aus der Gruppe bestehend aus Hartmetallen, insbesondere Wolframcarbid.

In dem erfindungsgemäßen Spikeverbund ist der Spike-Körper abschnittsweise um den Spike-Körper herum angeordnet, wobei es bevorzugt ist, wenn der Spike-Mantel den Spike-Körper umlaufend vollständig umgibt und beispielsweise nur den Spike-Pin frei lässt. Bevorzugt ist dabei ein erfindungsgemäßer Spikeverbund, wobei der Spike-Körper zu 50 % oder mehr, bevorzugt zu 70 % oder mehr, vom Spike-Mantel umgeben ist, bezogen auf die Länge des Spike-Körpers.

Der Spike-Körper und der Spike-Mantel können beispielsweise über Formschluss verbunden werden, welche bspw. durch die Formgebung des Spike-Körpers befördert werden kann. Wegen der vorteilhaften Adhäsion des erfindungsgemäßen Vulkanisates ist es aber bevorzugt, zumindest teilweise eine formschlüssige Verbindung auszubilden, bevorzugt unter Einsatz eines Haftvermittlers. Bevorzugt ist somit ein erfindungsgemäßer Spikeverbund, wobei der Spike-Körper stoffschlüssig und/oder formschlüssig und/oder kraftschlüssig, bevorzugt zumindest stoffschlüssig und formschlüssig mit dem Spike-Mantel verbunden ist.

Bevorzugt ist ein erfindungsgemäßer Spikeverbund, wobei der Spike-Mantel zu 90 % oder mehr, bevorzugt zu 95 % oder mehr, besonders bevorzugt zu im Wesentlichen 100 % aus dem erfindungsgemäßen Vulkanisat besteht.

Bevorzugt ist ein erfindungsgemäßer Spikeverbund, wobei der Spikemantel das Vulkanisat in einem Gesamtgewicht im Bereich von 0,1 bis 7 g, bevorzugt im Bereich von 0,2 bis 5 g, besonders bevorzugt im Bereich von 0,5 bis 2 g, umfasst.

Durch Bespikung eines bespikebaren Fahrzeugreifen mit erfindungsgemäßen Spikeverbunden wird ein vorteilhafter Fahrzeugreifen erhalten. Die Erfindung betrifft entsprechend auch einen Fahrzeugreifen, umfassend an der Oberseite des Laufstreifens eine Vielzahl an Spikeaufnahme-Ausnehmungen und eine Vielzahl von jeweils in einer der Spikeaufnahme-Ausnehmungen angeordneten erfindungsgemäße Spikeverbunde. Beispielhaft ist ein erfindungsgemäßer Fahrzeugreifen, wobei der Fahrzeugreifen ein Fahrzeugluftreifen, bevorzugt ein PKW-Reifen oder ein LKW-Reifen, ist.

In den Experimenten der Erfinder hat sich gezeigt, dass sich die erfindungsgemäße vulkanisierbare Kautschukmischung in vorteilhafter Weise auch besonders dafür eignet, als vulkanisierbarer Klebstoff zu fungieren, mit dem sich Reifenkomponenten, beispielsweise Reifensensoren oder ähnliche Bauteile, an einem Gummiwerkstoff, beispielsweise an einer Reifeninnenschicht, befestigen lassen, wobei die vulkanisierbare Kautschukmischung theoretisch auch dazu eingesetzt werden könnte, Spikes, insbesondere erfindungsgemäße Spikeverbunde, in Spikelöchern durch Vulkanisation weiter stoffschlüssig zu fixieren.

Offenbart wird vor diesem Hintergrund ein Verfahren zur Befestigung eines Reifenbauteils an einem Fahrzeugreifen mit einer erfindungsgemäßen vulkanisierbaren Kautschukmischung, umfassend die Verfahrensschritte:
a) Herstellen oder Bereitstellen eines Fahrzeugreifens,
b) Verbinden des zu befestigenden Reifenbauteils mit dem Fahrzeugreifen mit der vulkanisierbaren Kautschukmischung, und
c) Vulkanisieren der vulkanisierbaren Kautschukmischung zum Erhalt einer stoffschlüssigen Verbindung zwischen dem Fahrzeugreifen und dem Reifenbauteil.

Offenbart wird entsprechend zudem eine Verwendung einer erfindungsgemäßen vulkanisierbaren Kautschukmischung als Klebstoff bei der Befestigung eines Reifenbauteils an einem Fahrzeugreifen.

Nachfolgend werden die Erfindung und bevorzugte Ausführungsformen der Erfindung unter Bezugnahme auf Vergleichsexperimente näher erläutert und beschrieben.

### A. Herstellung der vulkanisierbaren Kautschukmischungen:

Die Herstellung der vulkanisierbaren Kautschukmischungen erfolgte nach dem in der Kautschukindustrie üblichen Verfahren unter üblichen Bedingungen in drei Stufen in einem Labormischer (300 mL, Brabender Mixer, CW Brabender GmbH & Co., South Hackensack, NJ, US), bei dem zunächst in einer ersten Mischstufe (Grundmischstufe,
Rotorgeschwindigkeit: 70 U/min, Starttemperatur: ca. 130 °C,
Endtemperatur: ca. 149 °C) alle Bestandteile außer dem Vulkanisationssystem (Schwefel und vulkanisationsbeeinflussende Substanzen) vermischt wurden. Durch Zugabe des Vulkanisationssystems in der zweiten Stufe (Fertigmischstufe; Rotorgeschwindigkeit: 55 U/min, Temperatur: ca. 80 °C,) wurde die vulkanisierbare Kautschukmischung erzeugt.

Die hierbei eingesetzten Substanzen sind in Tabelle 1 aufgeführt.

**Tabelle 1 - Eingesetzte Substanzen**

| Abkürzung | Erläuterung |
|---|---|
| NR | Natürliches Polyisopren TSR |
| fl. IR | flüssiges synthetisches Polyisopren, gewichtsmittlere Molmasse Mw = 54000 g/mol (Handelsname: LIR-50, Fa. Kuraray) |
| BR | funktionalisierter Butadienkutschuk ("low cis"; Handelsname: BR 1261, Fa. Zeon) |
| SBR | Styrol-Butatien-Kautschuk, gewichtsmittlere Molmasse Mw = 353000 g/mol (Handelsname: Nipol NS 116R, Fa. Zeon) |
| Füllstoff 1 | Ruß N339 |
| Füllstoff 2 | Gefälltes Siliciumdioxid (Handelsname: Ultrasil VN3, Fa. Evonik) |
| Weichm.Öl 1 | MES Öl ("Medium Extraction Solvate") |
| Weichm.Öl 2 | Rapsöl |
| Additiv 1 | Alterungsschutzmittel (DTPD, 6PPD, TMQ) |
| Additiv 2 | Ozonschutzwachs |
| Additiv 3 | Zinkoxid |
| Additiv 4 | Stearinsäure |
| Additiv 5 | Prozesshilfsmittel (Gemisch aus Calciumseifen und ungesättigten Fettsäureamiden) |
| Additiv 6 | Silankupplungsagenz (Handelsname: NXT, Fa. Momentive) |
| Vulkan. 1 | DPG (N,N'-Diphenylguanidin) |
| Vulkan. 2 | ZBEC (Dibenzyldithiocarbamat Zink) |
| Vukan. 3 | TBBS (N-t-Butyl-2-benzothiazolsulfenamid) |
| Vulkan. 4 | CBS (N-Cyclohexylbenzothiazol-2-sulfenamid) |
| Vulkan. 5 | Schwefel |

Aus sämtlichen vulkanisierbaren Kautschukmischungen wurden mittels Vulkanisation (Vulkanisationsbedingungen: t: 20 min, T: 160 °C) genormte, vulkanisierte Vulkanisate als Prüfkörper hergestellt.

### B. Bestimmung der physikalisch-chemischen Eigenschaften der vulkanisierbaren Kautschukmischungen:

An den hergestellten vulkanisierbaren Kautschukmischungen wurde die folgenden physikalisch-chemischen Eigenschaften mit den nachfolgend beschriebenen Bestimmungsverfahren bestimmt:
- Mooney-Viskosität (ML1+3), gemäß ASTM D1646-19 (Mooney-Einheiten abgekürzt "ME"); und
- Umsatzzeit von 10 %, 40 % und 90% Umsatz (t10, t40 und t90 Ausvulkanisationszeiten) mittels rotorlosem Vulkameter (MDR = Moving Disc Rheometer) gemäß ASTM D 5289-12 /ISO 6502

### C. Bestimmung der physikalisch-chemischen Eigenschaften der Vulkanisate:

An den hergestellten Vulkanisaten wurden die folgenden physikalisch-chemischen Eigenschaften mit den nachfolgend beschriebenen Bestimmungsverfahren bestimmt:
- Shore-A-Härte bei Raumtemperatur (25 °C) gemäß DIN ISO 7619-1 - 2012-02;
- Rückprallelastizität (Rückpr.) bei Raumtemperatur (25 °C) gemäß ISO 4662:2017-06; und
- Zugfestigkeit, Zugdehnung, Bruchenergie und Spannungswert bei 100% (M100) bei Raumtemperatur gemäß DIN 53504:2017-03.

### D. Versuchsreihe:

Es wurden elf vulkanisierbare Kautschukmischungen hergestellt, deren Zusammensetzung in Tabelle 2 angegeben ist.

**Tabelle 2 - Vulkanisierbare Kautschukmischungen (alle Angaben in phr)**

| Bestandteile | E1 | E2 | E3 | E4 | E5 | V1 | V2 | V3 | V4 | V5 | V6 |
|---|---|---|---|---|---|---|---|---|---|---|---|
| NR | 45 | 45 | 45 | 45 | 45 | 45 | 15 | 65 | - | 60 | 70 |
| fl. IR | 25 | 25 | 25 | 25 | 25 | 25 | 55 | 5 | 25 | - | - |
| BR | 30 | 30 | 30 | 30 | 30 | 30 | 30 | 30 | 30 | 40 | 30 |
| SBR | - | - | - | - | - | - | - | - | 45 | - | - |
| Füllstoff 1 | 50 | 50 | 20 | 57 | 57 | 90 | 57 | 57 | 57 | 5 | 57 |
| Füllstoff 2 | - | - | 40 | - | - | - | - | - | - | 100 | - |
| Weichm.Öl 1 | - | - | 16 | 12 | 12 | 40 | 12 | 12 | 12 | - | 12 |
| Weichm.Öl 2 | 5 | 12 | - | - | - | - | - | - | - | 25 | - |
| Additiv 1 | 4,6 | 4,6 | 4,6 | 4,6 | 4,6 | 4,6 | 4,6 | 4,6 | 4,6 | 5,0 | 4,6 |
| Additiv 2 | - | - | - | - | - | - | - | - | - | 2 | - |
| Additiv 3 | 3 | 3 | 3 | 3 | 3 | 3 | 3 | 3 | 3 | 3 | 3 |
| Additiv 4 | 2 | 2 | 2 | 2 | 2 | 2 | 2 | 2 | 2 | 1 | 2 |
| Additiv 5 | 3 | 3 | 3 | 3 | 3 | 3 | 3 | 3 | 3 | 2 | 3 |
| Additiv 6 | - | - | 4 | - | - | - | - | - | - | 10 | - |
| Vulkan. 1 | - | - | 1,0 | - | - | - | - | - | - | 1,5 | - |
| Vulkan. 2 | 0,25 | 0,25 | - | 0,2 | - | - | - | - | - | - | - |
| Vukan. 3 | 1,5 | 2,5 | 2,5 | 1,5 | 2,5 | 2,5 | 2,5 | 2,5 | 2,5 | - | 2,5 |
| Vulkan. 4 | - | - | - | - | - | - | - | - | - | 2,31 | - |
| Vulkan. 5 | 2,5 | 4,0 | 2,0 | 2,5 | 2,0 | 2,0 | 2,0 | 2,0 | 2,0 | 1,84 | 2,0 |

Die an den vulkanisierbaren Kautschukmischungen bzw. den zugehörigen Vulkanisaten bestimmten Materialeigenschaften sind in Tabelle 3 zusammengefasst.

**Tabelle 3 - Materialeigenschaften**

| | E1 | E2 | E3 | E4 | E5 | V1 | V2 | V3 | V4 | V5 | V6 |
|---|---|---|---|---|---|---|---|---|---|---|---|
| Mooney (ML1+3) / ME | 34 | 25 | 28 | 33 | 32 | 33 | 17 | 51 | 32 | 67 | 59 |
| t10 / min | 2,0 | 2,0 | 2,8 | 2,2 | 3,1 | 3,4 | 3,9 | 2,6 | 4,4 | 2,2 | 2,5 |
| t40 / min | 2,4 | 2,3 | 3,4 | 2,6 | 3,7 | 4,1 | 4,4 | 3,4 | 5,3 | 2,5 | 3,3 |
| t90 / min | 3,5 | 3,4 | 5,3 | 3,7 | 5,3 | 5,7 | 6,1 | 4,9 | 7,8 | 3,6 | 4,8 |
| Härte (ShA) | 62,9 | 64,3 | 62,6 | 62,7 | 65,7 | 66 | 64,6 | 67 | 66,2 | 70,6 | 66 |
| Rückprall / % | 45,1 | 49,9 | 50,7 | 41,3 | 43,5 | 30 | 36,9 | 47,6 | 34,7 | 41,8 | 48 |
| M100 / MPa | 2,3 | 2,7 | 2,4 | 2,3 | 2,7 | 2,4 | 2,4 | 3 | 2,9 | 2,9 | 2,8 |
| Zugfestigkeit / MPa | 13,3 | 9,8 | 12,7 | 13,4 | 13,4 | 12,3 | 5,6 | 14,9 | 9,8 | 14,4 | 18 |
| Zugdehnung / % | 363 | 267 | 400 | 367 | 335 | 353 | 207 | 320 | 252 | 402 | 385 |
| Bruchenergie / (J/cm³) | 18 | 10 | 21 | 19 | 17 | 17 | 5 | 18 | 9 | 24 | 27 |

Es ist zu erkennen, dass die erfindungsgemäßen vulkanisierbaren Kautschukmischungen das spezifische Anforderungsprofil in besonders vorteilhafter Weise erfüllen.

Die erfindungsgemäßen vulkanisierbaren Kautschukmischungen erreichen vorteilhafte Verarbeitungseigenschaften, insbesondere auch gegenüber der V5, welche an vulkanisierbaren Kautschukmischungen ausgerichtet ist, welche in realen Fahrzeugreifen bereits zum Einsatz kamen.

Zudem zeigen sich vorteilhafte Vulkanisationszeiten und günstige mechanische Eigenschaften.

Die Probe E2, welche einen höheren Schwefelgehalt aufwies, zeigte qualitativ besonders vorteilhafte Adhäsionseigenschaften zu Spikes aus (Hart-)Metall.

## Patentansprüche

1. Vulkanisierbare Kautschukmischung, umfassend:
i) Naturkautschuk in einem kombinierten Massenanteil von 25 phr oder mehr,
ii) synthetisches Polyisopren in einem kombinierten Massenanteil im Bereich von 20 bis 45 phr, wobei das synthetische Polyisopren eine gewichtsmittlere Molmasse Mw, gemessen mittels GPC, im Bereich von 20000 bis 80000 g/mol aufweist, und
iii) einen oder mehrere Füllstoffe in einem kombinierten Massenanteil von 35 phr oder mehr,
wobei der kombinierte Massenanteil an Weichmacherölen in der vulkanisierbaren Kautschukmischung 20 phr oder weniger beträgt.

2. Vulkanisierbare Kautschukmischung nach Anspruch 1, wobei die vulkanisierbare Kautschukmischung Naturkautschuk in einem kombinierten Massenanteil von 30 phr oder mehr umfasst.

3. Vulkanisierbare Kautschukmischung nach einem der Ansprüche 1 oder 2, wobei die vulkanisierbare Kautschukmischung Polyisopren in einem kombinierten Massenanteil von 22 phr oder mehr umfasst,

4. Vulkanisierbare Kautschukmischung nach einem der Ansprüche 1 bis 3, wobei das Polyisopren eine gewichtsmittlere Molmasse Mw, gemessen mittels GPC, im Bereich von 25000 bis 70000 g/mol aufweist.

5. Vulkanisierbare Kautschukmischung nach einem der Ansprüche 1 bis 4, wobei die vulkanisierbare Kautschukmischung den einen oder die mehreren Füllstoffe in einem kombinierten Massenanteil von 40 phr oder mehr umfasst.

6. Vulkanisierbare Kautschukmischung nach einem der Ansprüche 1 bis 5, wobei der kombinierte Massenanteil an Weichmacherölen in der vulkanisierbaren Kautschukmischung 15 phr oder weniger beträgt.

7. Vulkanisierbare Kautschukmischung nach einem der Ansprüche 1 bis 6, umfassend Schwefel in einem Massenanteil von weniger als 3,5 phr.

8. Vulkanisat, hergestellt oder herstellbar durch Vulkanisation einer vulkanisierbaren Kautschukmischung nach einem der Ansprüche 1 bis 7.

9. Spikeverbund für den Einsatz als Spike beim Bespiken von Fahrzeugreifen, umfassend:
I) einen Spike-Körper, und
II) einen Spike-Mantel, umfassend ein Vulkanisat nach Anspruch 8,
wobei der Spike-Mantel zumindest abschnittsweise um den Spike-Grundkörper herum angeordnet ist.

10. Fahrzeugreifen, umfassend an der Oberseite des Laufstreifens eine Vielzahl an Spikeaufnahme-Ausnehmungen und eine Vielzahl von jeweils in einer der Spikeaufnahme-Ausnehmungen angeordneten Spikeverbunde nach Anspruch 9.
